**Europäisches Patentamt**

**European Patent Office**

**Office européen des brevets**

(19)

(11) Numéro de publication : **0 149 933**
**B1**

(12)

# FASCICULE DE BREVET EUROPÉEN

(45) Date de publication du fascicule du brevet :
**26.04.89**

(51) Int. Cl.⁴ : **A 01 G 17/08**

(21) Numéro de dépôt : **84402403.4**

(22) Date de dépôt : **26.11.84**

(54) **Agrafe pour ligaturer des plantes, notamment la vigne.**

(30) Priorité : **20.01.84 FR 8400853**

(43) Date de publication de la demande :
**31.07.85 Bulletin 85/31**

(45) Mention de la délivrance du brevet :
**26.04.89 Bulletin 89/17**

(84) Etats contractants désignés :
**AT DE FR IT**

(56) Documents cités :
**FR-A- 1 352 077**
**FR-A- 2 231 480**
**FR-A- 2 251 157**

(73) Titulaire : **SOCIETE FRANCAISE D' AGRAFAGE INDUSTRIEL SOFRAGRAF**
**Saint-Amé**
**F-88120 Vagney (FR)**

(72) Inventeur : **Barlogis, René**
**20, rue des Pommiers Saint Amé**
**F-88120 Vagney (FR)**

(74) Mandataire : **de Boisse, Louis Arnaud et al**
**CABINET de BOISSE 37, Avenue Franklin D. Roosevelt**
**F-75008 Paris (FR)**

EP 0 149 933 B1

Jouve, 18, rue St-Denis, 75001 Paris, France

## Description

L'invention concerne un dispositif pour ligaturer des plantes contre un support tel qu'un fil de fer, comprenant au moins une agrafe et une pince. Elle est particulièrement applicable à la vigne.

On sait que le palissage de la vigne consiste à organiser les plantations de vignobles en rangées, le long de fils métalliques pour maintenir les sarments de vignes.

La ligature du sarment sur le fil métallique est assurée souvent à l'aide d'agrafes posées avec une pince manuelle, permettant ainsi un gain de temps très appréciable.

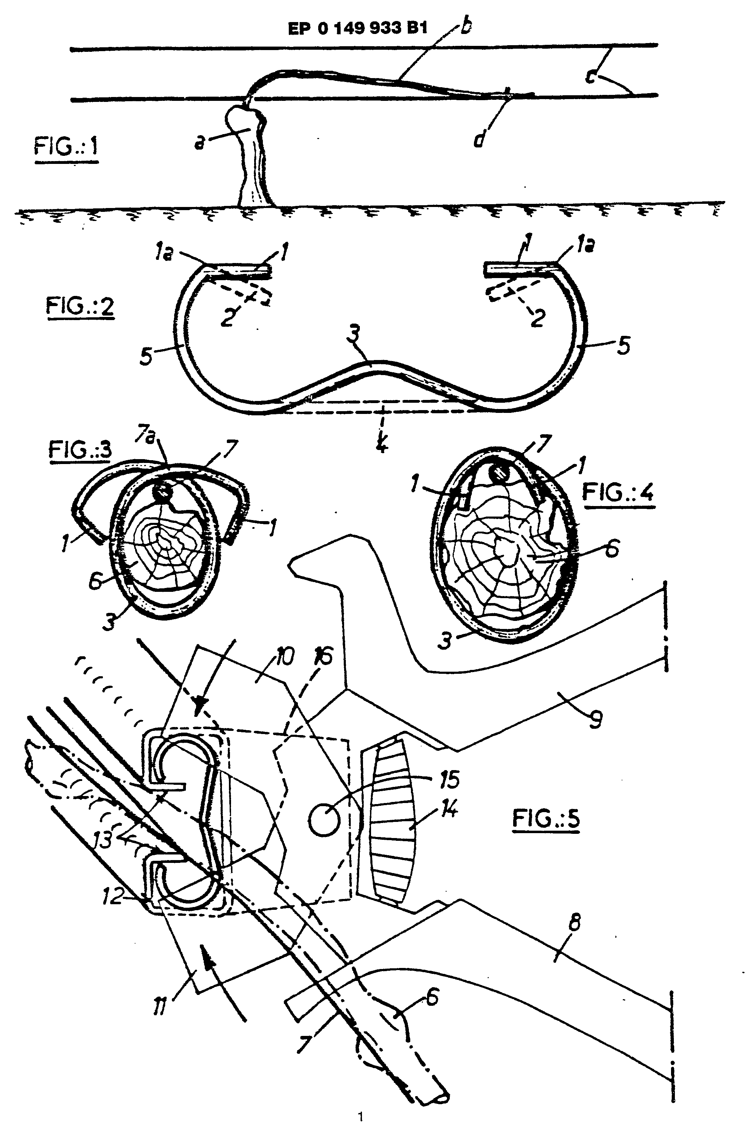

Le document FR-A-2 251 157 décrit un dispositif pour ligaturer une branche de plante contre un support, comprenant au moins une agrafe et une pince capable de déformer l'agrafe autour de la branche et du support, l'agrafe présentant, avant déformation, une forme comportant un corps central qui peut comporter une partie médiane rectiligne et qui est prolongé de chaque côté par une partie courbe ayant une concavité dirigée vers le centre du corps central, l'écart entre les deux extrémités des parties courbes permettant la mise en place directe de la branche et du support contre le corps central, la pince et l'agrafe étant calculées pour que, après déformation de l'agrafe par la pince autour de l'objet, ladite agrafe présente la forme d'un contour fermé, ses extrémités se croisant. Selon les figures 3 à 5, de ce document, chaque partie courbe de l'agrafe est prolongée par une partie à peu près rectiligne, dirigée vers l'extérieur de l'agrafe, et, après déformation autour du support et de la branche, les deux extrémités de l'agrafe se croisent au-delà de la branche et font saillie vers l'extérieur, risquant de blesser un opérateur au moment de la récolte. Par ailleurs, la force du vent sur le feuillage et l'inertie des raisins risquent de faire tourner la branche par rapport au support et de blesser l'écorce sur une partie étendue de la périphérie de la branche, spécialement lorsque la branche a grossi en diamètre.

La présente invention a pour but d'éviter ces inconvénients, tout en conservant une forme simple pour l'agrafe et la possibilité d'une pose facile.

Ce résultat est atteint, avec un dispositif du type indiqué ci-dessus, par le fait que

— chaque partie courbe de l'agrafe est prolongée directement par une partie d'extrémité, ces deux parties d'extrémité étant dirigées l'une vers l'autre et/ou vers l'intérieur de l'agrafe,

— après ladite déformation autour du support et de la branche, les deux extrémités de l'agrafe se trouvent dirigées vers la branche,

— et lesdites extrémités de l'agrafe sont disposées pour pénétrer dans ladite branche au cours de la croissance ultérieure de celle-ci.

A titre d'exemple, on a décrit ci-dessous et illustré schématiquement au dessin annexé une forme de réalisation de l'invention.

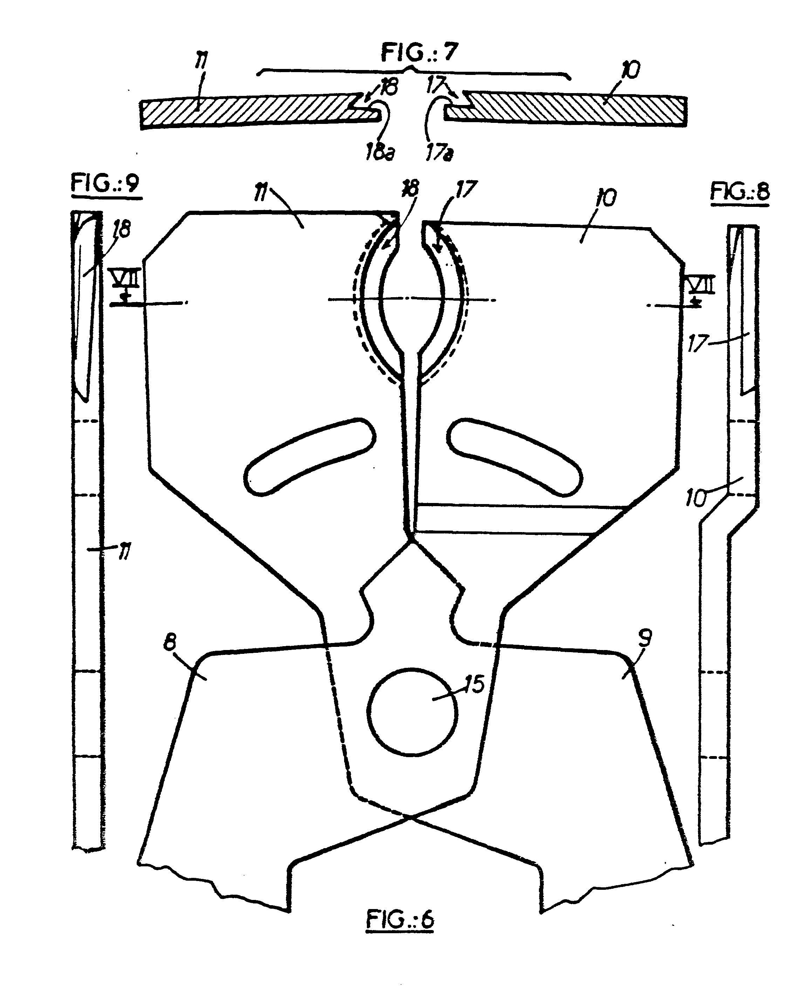

La figure 1 montre schématiquement, en élévation latérale et à échelle très réduite, la fixation d'un sarment de vigne sur un fil de fer. La figure 2 montre en vue de profil une agrafe selon l'invention telle qu'elle se présente avant sa pose. La figure 3 montre la même agrafe posée pour lier entre eux un sarment et un fil de fer. La figure 4 est une vue semblable montrant la configuration de l'agrafe quand le sarment a grossi. La figure 5 illustre la pose de l'agrafe au moyen d'une pince. La figure 6 est une vue partielle, en élévation, d'une pince d'agrafage selon l'invention. La figure 7 est une vue partielle en coupe suivant la ligne VII-VII de la figure 6. Les figures 8 et 9 sont des vues de face des deux mâchoires de la pince de la figure 6.

On voit sur la figure 1 un pied de vigne a, un sarment b, et deux fils de fer tendus c, sur lesquels les sarments doivent être ligaturés comme par exemple en d.

Dans le mode de réalisation représenté sur la figure 2, l'agrafe selon l'invention a, avant pose, une forme rappelant celle d'un oméga dont le dos peut être courbé comme figuré en 3, ou au contraire être plat comme indiqué en pointillé en 4.

Près de chaque extrémité, l'agrafe a une partie courbe, 5, et ses extrémités 1 sont dirigées vers l'intérieur. Lesdites extrémités 1, qui peuvent se terminer en pointe, forment, en 1a, un angle avec les parties courbes 5. Elles peuvent être inclinées davantage vers l'intérieur de l'agrafe comme indiqué en 2.

L'extension spatiale de l'agrafe, c'est-à-dire sa longueur entre les parties 5, est choisie assez grande pour que, après déformation et serrage de l'agrafe sur le sarment 6 et le fil métallique 7 devant être ligaturés (figure 3), l'agrafe forme, autour du sarment et du fil métallique, deux arcs, qui se croisent en 7a, de sorte que les extrémités 1 de l'agrafe se trouvent dirigées vers le sarment.

Il s'ensuit que, lors de la croissance du sarment, l'augmentation de son diamètre est compensée par une déformation radiale de l'agrafe, tandis que ses extrémités 1 viennent s'engager dans le bois. Ainsi l'agrafe reste toujours bien serrée et peut supporter aussi bien la forme du vent que le poids des fruits et les vibrations. Elle n'a pas tendance à tomber dans la récolte, au moment de la vendange. De plus, comme les extrémités de l'agrafe sont retournées vers le sarment, elles ne peuvent blesser les ouvriers agricoles. Pour la pose, on peut utiliser les agrafes sous la forme d'une bande se composant d'agrafes encollées ou assemblées les unes aux autres de toute autre manière ; la bande est placée dans le chargeur 12 dont on voit le bout sur la figure 5.

Ce chargeur comporte une rainure limitée par deux joues 13, permettant le passage du sarment 6 et du fil 7, sur lesquels le chargeur se trouve à cheval. En faisant sortir la première agrafe, on peut la déformer, pour faire la ligature, au moyen d'une pince, dont les mâchoires articulées, 10, 11, sont manœuvrées par les poignées 8 et 9. Un ressort de rappel, 14, remet les branches de la pince en position de repos.

Dans la réalisation illustrée sur la figure 5, l'axe d'articulation 15 des mâchoires 10 et 11 de la pince est fixé à une plaque de support, 16, qui est elle-même solidaire de l'extrémité de sortie du chargeur 12. A titre de variante, la pince peut être indépendante du chargeur.

La pince d'agrafage selon la présente invention, qui est représentée schématiquement et partiellement sur les figures 6 à 9, a ses deux mâchoires 10 et 11 munies respectivement d'entailles 17 et 18, disposées de façon à se faire face et à venir attaquer respectivement, lorsque les poignées 8 et 9 de la pince sont rapprochées manuellement, les deux parties incurvées (5 sur la figure 2) de l'agrafe, et à les rapprocher l'une de l'autre ; cette pince selon la présente invention offre en outre les caractéristiques avantageuses suivantes : les entailles 17 et 18 de ses deux mâchoires 10 et 11 ont chacune une section transversale en forme de V, comme visible sur la vue en coupe de la figure 7, et les deux flancs correspondants, 17a et 18a, des deux entailles 17 et 18, sont décalés l'un par rapport à l'autre, de manière à décaler, lors de l'agrafage, les deux parties incurvées (5 sur la figure 2) de l'agrafe, initialement plane, et à faciliter ainsi le croisement des arcs formés par l'agrafe — comme visible en 3 sur la figure 3 — autour de la branche 6 et du fil métallique 7 (figure 3). L'utilisation de cette pince selon la présente invention offre l'important avantage de permettre la pose d'agrafes qui sont venues planes de fabrication, et d'éviter ainsi la nécessité de fabriquer des agrafes présentant une certaine torsion — un certain décalage entre les parties incurvées 5 de la figure 2 — ; ceci a pour effet de réduire sensiblement le coût de fabrication des agrafes selon la présente invention.

A titre de variante, les deux flancs de l'une des deux entailles en V, 17 et 18, pourraient être chacun décalés par rapport aux flancs correspondants de l'autre entaille.

## Revendications

1. Dispositif pour ligaturer une branche de plante contre un support, comprenant au moins une agrafe et une pince capable de déformer l'agrafe autour de la branche et du support, l'agrafe présentant, avant déformation, une forme comportant un corps central (3, 4) qui peut comporter une partie médiane rectiligne et qui est prolongé de chaque côté par une partie courbe (5) ayant une concavité dirigée vers le centre du corps central, l'écart entre les deux extrémités (1) des parties courbes permettant la mise en place directe de la branche (5) et du support (7) contre le corps central, la pince et l'agrafe étant calculées pour que, après déformation de l'agrafe par la pince autour de l'objet, ladite agrafe présente la forme d'un contour fermé, ses extrémités se croisant, caractérisé en ce que

— chaque partie courbe (5) de l'agrafe avant déformation est prolongée directement par une partie d'extrémité (1), ces deux parties d'extrémité étant dirigées l'une vers l'autre et ou vers l'intérieur de l'agrafe,

— après ladite déformation autour du support et de la branche, les deux extrémités (1) de l'agrafe se trouvent dirigées vers la branche (6),

— et lesdites extrémités de l'agrafe sont disposées pour pénétrer dans ladite branche au cours de la croissance ultérieure de celle-ci.

2. Dispositif selon la revendication 1, caractérisé en ce que le corps central de l'agrafe avant déformation présente une cambrure tournant sa concavité vers l'extérieur.

## Claims

1. A device for tying a branch of a plant to a support, comprising at least a staple and a pliers for buckling the staple around the branch and the support, the shape of the staple before buckling, comprising a central part (3, 4) which can have a rectilinear middle portion and which is extended on each side by a curved part (5) having a concavity oriented towards the middle point of the central part, the distance between both ends (1) of the curved parts (5) being sufficient to allow the branch (5) and the support (7) to be directly placed against the central part, the pliers and the staple being designed so that, after buckling of the staple around the piece ; the said staple is in the shape of a closed outline, with intercrossing ends, characterized in that

— each curved part (5) of the staple, before buckling, is directly extended with an end part (1), those two end parts being each oriented to the other or towards the inner part of the staple,

— after said buckling around the support and the branch, both ends (1) of the staple are oriented towards the branch (6),

— and the said ends of the staple are arranged so as to enter into the branch during its later growth.

2. A device according to claim 1, wherein before buckling the central part of the staple has a curvature the concavity of which is outwardly oriented.

## Patentansprüche

1. Vorrichtung zum Anbinden eines Pflanzenzweigs an einen Halter, mit wenigstens einer Klammer und einem Zangenwerkzeug zum Verformen der Klammer um den Zweig und den Halter herum, wobei die Klammer vor der Verformung eine Gestalt mit einem Mittelstück (3, 4) hat, dessen mittlerer Abschnitt geradlinig sein kann und das sich beiderseits mit einem gebogenen Abschnitt (5) fortsetzt, der zur Mitte des Mittelstücks hin einwärts gewölbt ist, wobei der Abstand zwischen den beiden Enden (1) der gebogenen Abschnitte (5) es erlaubt, den Zweig (6) und den Halter (7) unmittelbar am Mittelstück zur Anlage zu bringen, und wobei das Zangenwerkzeug sowie die Klammer derart ausgelegt sind, daß nach der Verformung mittels des Zangenwerkzeugs die das Verbindungspaar umschließende Klammer eine geschlossene Form mit sich kreuzenden Enden aufweist, dadurch gekennzeichnet, daß jeder gebogene Abschnitt (5) der Klammer vor der Verformung sich unmittelbar in einem Ende (1) fortsetzt, wobei die zwei Enden aufeinander zu oder zum Inneren der Klammer hin gerichtet sind, daß die beiden Enden (1) der Klammer nach der Verformung um den Halter und den Zweig herum auf letzteren zu gerichtet sind und daß die Enden der Klammer so ausgebildet sind, daß sie beim späteren Überkreuzen des Zweiges in diesen eindrückbar sind.

2. Vorrichtung nach Anspruch 1, dadurch gekennzeichnet, daß das Mittelstück der Klammer vor der Verformung eine mit der Hohlwölbung nach außen zeigende Krümmung aufweist.

FIG.:1

FIG.:2

FIG.:3

FIG.:4

FIG.:5

FIG.: 7

FIG.: 9

FIG.: 8

FIG.: 6